# DEMANDE DE BREVET EUROPEEN

(11) **EP 0 903 868 A1**
(43) Date de publication de la demande: **24.03.1999**
(21) Numéro de dépôt: 98202749.2
(22) Date de dépôt: 17.08.1998
(51) Int. Cl.: H04B 1/38, H04M 1/02

(54) **Lecteur de cartes à puce avec adaptateur pour lire des formats de cartes différents, téléphone comportant un tel lecteur**

(30) Priorité: 19.08.1997 FR 9710472
(71) Demandeur: Koninklijke Philips Electronics N.V., 5621 BA Eindhoven (NL)
(72) Inventeur: Jubert, Laurent, 75008 Paris (FR)
(74) Mandataire: Landousy, Christian

(57) **Abrégé**

L'invention a pour but de permettre la lecture d'une grande ou d'une petite carte qui présentent une même configuration de contact.

Une plaque tiroir 10 est prévue à cet effet : elle coulisse entre une position ouverte et une position fermée. Lorsque la plaque est en position ouverte, une petite carte peut être introduite dans un logement 9. En position fermée la plaque permet de maintenir cette petite carte en place et d'assurer une pression suffisante pour établir le contact électrique. La plaque est dotée d'une ouverture 13 destinée à laisser passer le connecteur 4 en l'absence de petite carte : elle peut alors servir de support à une grande carte.

Applications : téléphone GSM notamment.

## Description

L'invention concerne un lecteur de carte électronique comportant un connecteur et des moyens d'adaptation pour la lecture d'une grande ou d'une petite carte ayant une même configuration de contact.

L'invention concerne également un téléphone incorporant un tel lecteur de carte, pour la lecture d'une grande carte dite carte ISO SIM, ou d'une petite carte dite carte Micro SIM.

L'invention a d'importantes applications dans le domaine de la téléphonie mobile et notamment de la norme GSM qui prévoit l'utilisation de deux formats différents pour la carte SIM, de l'anglais Suscriber Identity Module.

La demande de brevet européen n° 0556970 A1 décrit un radiotéléphone qui est apte à recevoir l'un ou l'autre des deux formats de cartes SIM. Ce radiotéléphone comporte un adapteur qui, pour la lecture d'une grande carte, est placé dans une cavité afin de ne pas faire obstacle au passage de la carte, et qui, pour la lecture d'une petite carte, bascule au moyen d'une liaison pivot et plaque les contacts du circuit intégré de la carte sur le connecteur du lecteur de carte.

Cette solution présente l'inconvénient suivant : lors du basculement de l'adaptateur celui-ci fait saillie avec le corps du téléphone et devient alors vulnérable aux chocs. Un choc transversal risque en effet de briser certaines des parties formant la liaison pivot, désolidarisant ainsi irrémédiablement l'adaptateur du corps du téléphone.

De plus, cette solution est relativement encombrante, ce qui va à l'encontre de la tendance actuelle à la miniaturisation des téléphones mobiles.

L'invention a notamment pour but de remédier à ces inconvénients. Pour cela, un lecteur de carte selon l'invention et tel que décrit dans le paragraphe introductif est caractérisé en ce que lesdits moyens d'adaptation comportent une plaque destinée à se déplacer entre une position ouverte notamment pour introduire une petite carte dans un logement pratiqué autour dudit connecteur et une position fermée notamment pour maintenir en place la petite carte préalablement introduite, ladite plaque étant dotée d'une ouverture pratiquée autour dudit connecteur permettant d'établir un contact entre ledit connecteur et une grande carte préalablement placée sur la plaque.

Dans des modes de réalisation particulièrement avantageux de l'invention, la plaque comporte des moyens pour exercer une pression de contact sur une petite carte introduite dans ledit logement, et le lecteur comporte des moyens de rappel de la plaque en position fermée.

L'invention sera mieux comprise et d'autres détails apparaîtront à la lumière de la description qui va suivre en regard des dessins annexés qui sont donnés à titre d'exemples non limitatifs et dans lesquels :
- la figure 1 représente un téléphone selon l'invention,
- la figure 2 est une représentation schématique d'une vue arrière d'un boîtier principal d'un téléphone selon l'invention, sans plaque,
- la figure 3 est une représentation schématique d'une vue arrière d'un boîtier principal d'un téléphone selon l'invention, avec une plaque en position fermée,
- la figure 4 est une représentation schématique d'une vue arrière d'un boîtier principal d'un téléphone selon l'invention, avec une plaque en position ouverte.

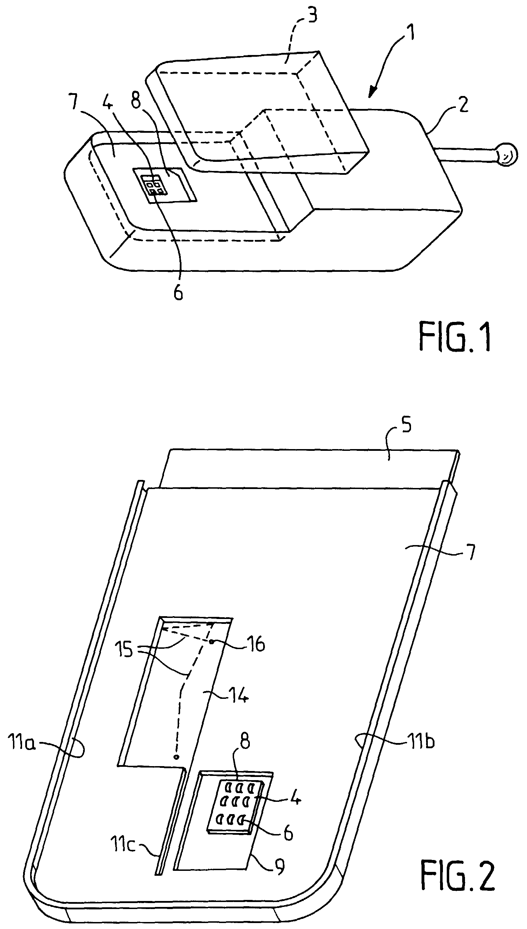

Sur la figure 1, on a représenté schématiquement un téléphone 1 selon l'invention. Ce téléphone 1 comporte un boîtier principal 2, et un module amovible 3 qui sert de couvercle au téléphone et qui contient par exemple une batterie pour l'alimentation électrique du téléphone.

Comme représenté sur les figures 1 et 2, le boîtier principal 2 contient une carte de circuits imprimés 5 sur laquelle est fixée entre autres composants un connecteur 4 d'un lecteur de carte à puce. Le boîtier 2 sert de bâti au lecteur de carte à puce. Le connecteur 4 est doté de doigts de contact à ressorts 6 destinés à être mis en contact avec les bornes du circuit intégré d'une carte à puce. Un support 7 en matière plastique est placé au-dessus de la carte de circuits imprimés. Il est doté d'une ouverture 8 pour laisser passer les doigts du connecteur 4, et d'un logement 9 pratiqué autour de cette ouverture 8 et destiné à recevoir une carte à puce de petit format, ou carte Micro SIM.

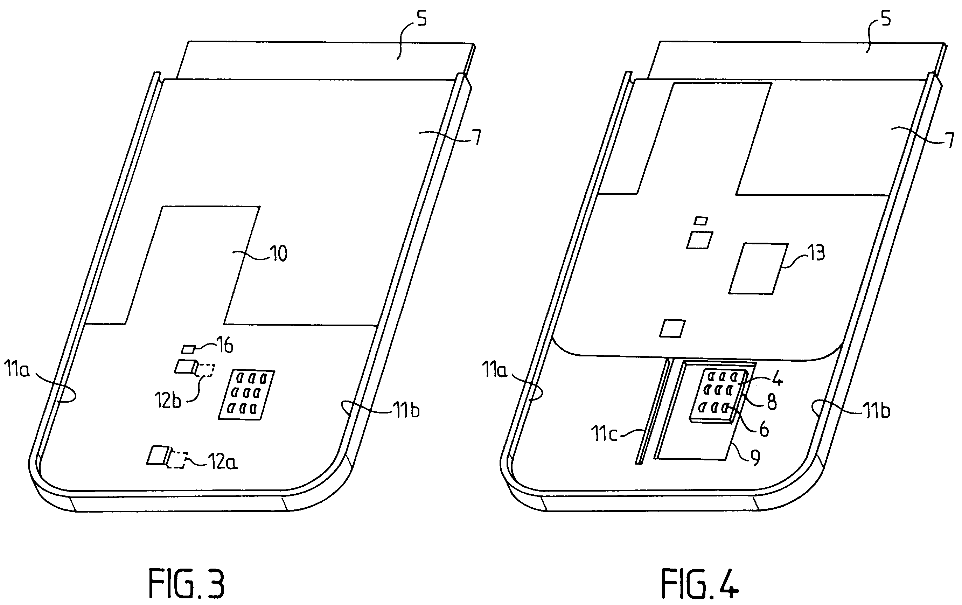

Une plaque tiroir 10 (figures 3 et 4), placée au dessus du support 7, est destinée à coulisser dans des glissières 11a et 11b prévues sur les côtés du boîtier principal 2, ainsi que dans une glissière 11c, dite glissière centrale, qui est pratiquée dans le support 7 le long de l'ouverture 8. La plaque tiroir est dotée de pieds 12a et 12b engagés dans la glissière centrale 11c : ces pieds 12a et 12b sont en forme de L, découpés dans la plaque tiroir 10 et repliés perpendiculairement à la plaque. L'utilisation d'une telle glissière centrale permet d'exercer une pression suffisante sur une petite carte introduite dans le logement 9 pour assurer le contact électrique avec les doigts du connecteur 4.

Sur la figure 3, la plaque tiroir 10 est représentée en position fermée, et sur la figure 4 elle est représentée en position ouverte. La position ouverte permet d'introduire une petite carte au format Micro SIM dans le logement 9. En position fermée, la plaque 10 permet alors de maintenir la petite carte en place, et d'exercer une pression suffisante pour que le contact électrique soit établi entre le circuit intégré de la petite carte et les doigts du connecteur. En l'absence de petite carte, la plaque tiroir est destinée à servir de support à une grande carte au format ISO SIM. Le circuit intégré de la carte vient alors se placer en regard d'une ouverture 13 pratiquée dans la plaque tiroir au niveau du connecteur 4 de telle sorte que le contact électrique soit établi. La pression nécessaire à l'établissement d'un bon contact est assurée par le module amovible 3 lorsque celui-ci est en place sur le boîtier principal du téléphone. Les ressorts des doigts de contact du connecteur 4 sont des ressorts à course longue de façon à assurer un contact avec les deux types de cartes qui, lorsqu'elles sont en place dans le téléphone, se situent à des distances différentes du connecteur 4.

Dans un mode de réalisation particulièrement simple à manipuler, des moyens de rappel sont prévus pour ramener automatiquement la plaque tiroir en position fermée. Pour cela, un logement 14 est prévu dans le support 7. Ce logement 14 est destiné à contenir un ressort 15 qui est fixé d'une part sur un point d'appui 16 de la plaque tiroir 10, et d'autre part sur le support 7 ou sur la carte à circuits imprimés 5. Le point d'appui 16 est découpé dans la plaque tiroir 10 et replié perpendiculairement à la plaque. Le ressort 15 est un ressort en épingle à cheveux.

## Revendications

1. Lecteur de carte électronique comportant un connecteur (4) et des moyens d'adaptation pour la lecture d'une grande ou d'une petite carte ayant une même configuration de contact, caractérisé en ce que lesdits moyens d'adaptation comportent une plaque (10) destinée à se déplacer entre une position ouverte notamment pour introduire une petite carte dans un logement (9) pratiqué autour dudit connecteur et une position fermée notamment pour maintenir en place la petite carte préalablement introduite, ladite plaque étant dotée d'une ouverture (13) pratiquée autour dudit connecteur permettant d'établir un contact entre ledit connecteur et une grande carte préalablement placée sur la plaque.

2. Lecteur de carte selon la revendication 1, caractérisé en ce que ladite plaque comporte des moyens (11c, 12a, 12b) pour exercer une pression de contact sur une petite carte introduite dans ledit logement.

3. Lecteur de carte selon l'une des revendications 1 ou 2, caractérisé en ce qu'il comporte des moyens de rappel (14, 15, 16) de ladite plaque en position fermée.

4. Lecteur de carte selon la revendication 1, caractérisé en ce qu'il comporte un bâti (2) doté de glissières (11a, 11b) et en ce que la plaque est une plaque tiroir coulissant dans lesdites glissières.

5. Lecteur de carte selon la revendication 4, caractérisé en ce que le bâti est notamment doté d'une glissière, dite glissière centrale (11c), placée le long dudit connecteur et en ce que la plaque tiroir est dotée d'au moins un pied (12a, 12b) engagé dans ladite glissière centrale de façon à exercer une pression de contact sur une petite carte introduite dans ledit logement.

6. Lecteur de carte selon l'une des revendications 4 ou 5, caractérisé en ce que ledit bâti comporte un logement (14) destiné à contenir un ressort (15) dont l'une des extrémités est fixée à un point d'appui (16) de la plaque tiroir de façon à exercer une pression sur la plaque lorsqu'elle est en position ouverte pour la rappeler en position fermée.

7. Téléphone (1) incorporant un lecteur de carte électronique selon l'une des revendications 1 à 6, pour la lecture d'une grande carte dite carte ISO SIM, ou d'une petite carte dite carte Micro SIM.
